# EUROPÄISCHE PATENTSCHRIFT

(11) **EP 1 924 786 B1**
(45) Veröffentlichungstag und Bekanntmachung des Hinweises auf die Patenterteilung: **13.05.2009**
(21) Anmeldenummer: 06805645.6
(22) Anmeldetag: 30.08.2006
(51) Int. Cl.: F16H 48/22, B60K 17/16

(54) **AUSGLEICHSGETRIEBE**
DIFFERENTIAL GEAR
DIFFERENTIEL

(30) Priorität: 30.08.2005 DE 102005041152
(43) Veröffentlichungstag der Anmeldung: 28.05.2008
(73) Patentinhaber: Getrag Driveline Systems GmbH, 50735 Köln (DE)
(72) Erfinder: NETT, Hans-Peter, 53518 Adenau (DE); DEIGNER, Thomas, 74629 Pfedelbach (DE)
(74) Vertreter: Bungartz, Klaus Peter
(86) Internationale Anmeldenummer: PCT/EP2006/008486
(87) Internationale Veröffentlichungsnummer: WO 2007/025737

(56) Entgegenhaltungen:
- FR-A- 2 864 190
- JP-A- 11 315 905
- US-A- 6 120 407

## Beschreibung

Die Erfindung betrifft ein Ausgleichsgetriebe für ein Kraftfahrzeug mit
■ einem angetriebenen Antriebskorb,
■ zwei über ein Planeten- oder Differentialgetriebe mit dem Antriebskorb gekoppelten Abtriebswellen, sowie
■ einem feststehenden Getriebegehäuse,
wobei je Abtriebswelle ein Zwischengetriebe mit einer Planeteneinheit vorgesehen ist, die Planeteneinheit mehrere Planetenradpaare und einen Planetenradträger umfasst, die Planetenradpaare auf mit dem Planetenradträger verbundenen Planetenradpaarwellen angeordnet sind und jeweils ein erstes Planetenrad und ein zweites Planetenrad aufweisen, wobei
■ das erste Planetenrad und das zweite Planetenrad koaxial zueinander angeordnet und drehfest miteinander verbunden sind,
■ das erste Planetenrad und das zweite Planetenrad einen unterschiedlichen wirksamen Durchmesser aufweisen,
■ das erste Planetenrad mit einem ersten drehfest mit dem Antriebskorb verbundenen ersten Sonnenrad und das zweite Planetenrad mit einem drehfest mit einer Abtriebswelle verbundenen zweiten Sonnerad, das koaxial zum ersten Sonnenrad angeordnet ist, in Eingriff stehen,
wobei eine Bremsvorrichtung vorgesehen ist, die Mittel zum Aufbringen einer ein Bremsmoment hervorrufenden Bremskraft aufweist, und das Bremsmoment die Planeteneinheit relativ zum feststehenden Getriebegehäuse abzubremsen vermag, und wobei die Planeteneinheit Wirkflächen aufweist, die zur Einleitung des Bremsmoments in die Planeteneinheit vorgesehen sind.

Ausgleichsgetriebe werden als Querausgleich der unterschiedlichen Drehzahlen der Räder verwendet, die sich bei Kurvenfahrt aufgrund der unterschiedlichen Weglängen der Fahrspuren ergeben. Das Antriebsmoment soll dabei in der Regel symmetrisch und damit giermomentenfrei auf die einzelnen Räder übertragen werden. In bestimmten Fahrsituationen oder zur Beeinflussung des Fahrcharakters eines Kraftfahrzeugs kann es jedoch wünschenswert sein, gezielt in die Antriebskraftverteilung auf die einzelnen Räder einzugreifen und das Fahrverhalten hierdurch zu optimieren bzw. um den Fahrer in kritischen Situationen zu entlasten. Dies kann sowohl durch Bremseingriff als auch durch Beeinflussung der Verteilung der Antriebsleistung eines Ausgleichsgetriebe auf die einzelnen Räder geschehen.

Ein Ausgleichsgetriebe der eingangs genannten Art weist die Besonderheit auf, dass bei Betätigung der Bremsvorrichtung die ansonsten mit Antriebskorb und Abtriebswelle mitrotierende Planeteneinheit abgebremst oder blockiert werden kann.

Bei nicht betätigter Bremsvorrichtung rotiert die Planeteneinheit im Block um die Abtriebswelle herum. Das Ausgleichsgetriebe erfüllt die Funktion eines üblichen Differentials. Bei Betätigung der Bremsvorrichtung wird, da die einzelnen Planetenräder der Planetenradpaare unterschiedliche wirksame Durchmesser aufweisen, als Folge des Abbremsens der Planeteneinheit über das Zwischengetriebe auf die Abtriebswelle ein Drehmoment übertragen, das die Abtriebswelle im Vergleich zum Betrieb bei nicht betätigter Bremsvorrichtung beschleunigt oder verzögert. Hierdurch wird gezielt ein Giermoment erzeugt, das durch die unterschiedlichen Drehzahlen der Antriebsräder bzw. durch das daraus resultierende unterschiedliche Antriebsradmoment bzw. Antriebsraddrehzahlen auf beiden Seiten des Fahrzeugs hervorgerufen wird. Im Gegensatz zu Differentialen, die lediglich eine aktive Sperre aufweisen, die bei vollem Sperrwert maximal eine Gleichschaltung der Abtriebswellendrehzahlen ermöglicht, kann erreicht werden, dass selbst das kurvenäußere Antriebsrad, das sich bei einem üblichen Differential wegen der längeren äußeren Fahrspur schneller dreht als das kurveninnere Antriebsrad, über die sich aus der Fahrspurlänge ergebende Raddrehzahl hinaus beschleunigt wird.

Durch gezielte Zuschaltung eines Giermoments kann in verschiedensten Fahrsituationen korrigierend in das Fahrverhalten des Fahrzeugs eingegriffen werden, oder es kann ein Fahrzeug mit besonderen Fahreigenschaften, insbesondere besonderem Kurveneilenkverhalten, geschaffen werden. Wegen der Zuschaltungsmöglichkeit eines Giermoments werden solche Getriebe auch "Active-Yaw" Getriebe genannt.

Ein solches Ausgleichsgetriebe, welches den Oberbegriff des Anspruchs 1 bildet, ist aus der US 6,120,407 bekannt. Bei diesem Differentialgetriebe kann die Planeteneinheit über eine an einer äußeren Mantelfläche eines scheibenförmigen Grundkörpers des Planetenträgers angeordnete Bremsvorrichtung abgebremst werden. Hierzu weist die Bremsvorrichtung einen über eine Hydraulikeinheit zusammenpressbaren Reiblamellenstapel auf. Dabei sind am Planetenträger Wirkflachen in Form von Innenlamellen vorgesehen, die drehfest am als Innenlamellenträger wirkenden Planetenträger angeordnet sind, während die Außenlamellen drehfest am feststehenden Getriebegehäuse angeordnet sind.

Diese Ausführung hat jedoch den Nachteil, dass die Bremsvorrichtung und die Wirkflächen weit von der Planeteneinheit beabstandet sind, was zu einer baulich aufwendigen, großen und dadurch auch verhältnismäßig schweren und teuren Planeteneinheit führt. Die zu beschleunigenden und abzubremsenden Massen der Planeteneinheit sind relativ hoch. Auch bedingt eine solche Ausgestaltung einen erhöhten Bauraumbedarf des gesamten Ausgleichgetriebes. Hinzu kommt, dass durch die unterschiedlichen Durchmesser des ersten und zweiten Planetenrades die auf diese Planetenräder wirkenden Kräfte ein Moment auf die Planeteneinheit aufbringen, das bei der bekannten Ausgestaltung durch eine aufwendige Lagerung der Planeteneinheit aufgefangen werden muss. Darüber hinaus ist eine aufwendige axiale Lagerung der Planeteneinheit auch zur ortsgenauen Positionierung zur Bremsvorrichtung erforderlich.

Aufgabe der Erfindung ist es, ein Ausgleichsgetriebe der eingangs genannten Art derart zu gestalten, dass die Nachteile des Standes der Technik vermieden werden. Das Ausgleichsgetriebe soll kompakt, gut regelbar, leicht und kostengünstig herstellbar sein. Ferner soll es eine hohe Lebensdauer aufweisen, sich durch geringen Bauraumbedarf und geringe konstruktive Komplexität auszeichnen sowie einen günstigen Wirkungsgrad erzielen.

Diese Aufgabe wird erfindungsgemäß dadurch gelöst, dass die Wirkflächen beidseitig der Planetenradpaare vorgesehen und zumindest zum Teil seitlich neben den Planetenradpaaren angeordnet sind.

Durch diese Anordnung der Wirkflächen wird eine kompaktere Bauform ermöglicht. Die Bremskraft kann unmittelbar neben der Planeteneinheit angreifen. Eine Anordnung der Bremsvorrichtung an einer weit von der Drehachse des Zwischengetriebes beabstandeten Stelle ist nicht erforderlich. Im äußeren Bereich der Planeteneinheit werden die zu bewegenden Massen verringert. Durch Anordnung der Wirkflächen beidseitig der Planeteneinheit wird erreicht, dass die Kräfte und Momente, die im Betrieb über die Planetenradpaare auf die Planeteneinheit wirken, unmittelbar über die Wirkflächen auf die Bremsvorrichtung wirken und von dieser abgefangen werden. Bremskraft und Bremsmoment greifen direkt an der Planeteneinheit an, ohne über einen konstruktiv komplex zu gestaltenden Planetenträger zu einer radial außen gelegenen Bremsvorrichtung geleitet werden zu müssen. Auch entfällt hierdurch eine aufwendige axiale Lagerung. Eine genaue Positionierung der Planeteneinheit ist aufgrund der unmittelbar zu den Wirkflächen benachbarten Bremsvorrichtung gewährleistet.

Die erfindungsgemäße Ausführung spart wegen des geringeren Bauraumbedarfs, der einfacheren konstruktiven Gestaltung und dem geringen Gewicht auch Kosten, sowohl im Betrieb als auch in der Entwicklung und Fertigung. Darüber hinaus führt das geringe Gewicht und die kompakte Bauform zu einer gegenüber dem Stand der Technik stabileren und leichteren Planeteneinheit, so dass Eingriffe der Bremsvorrichtung sicherer, präziser, schneller und besser dosiert erfolgen können. Die Regelung und Überwachung der Eingriffe wird so optimiert.

Um Bremskraft und Bremsmoment in die Planeteneinheit einzuleiten, ist weiter vorgesehen, dass die Bremsvorrichtung zur Einleitung des Bremsmoments in die Planeteneinheit beidseitig der Planeteneinheit Reiblammellen aufweist. Reiblamellen weisen eine Reibbelagsschicht auf, die üblicher Weise auf einem Grundkörper aufgebracht ist und über die das erforderliche Bremsmoment in sehr effizienter Weise über die Wirkflächen auf die Planeteneinheit übertragen werden kann. Ferner weisen Reiblamellen gegenüber anderen Maßnahmen zur Einleitung eines Bremsmoments ein sehr hohes Leistungsgewicht und einen niedrigem Platzbedarf bei gleichzeitig geringen Kosten und hoher Lebensdauer auf, was zur Kompaktheit und konstruktiven Einfachheit des Ausgleichsgetriebes beiträgt.

In einer bevorzugten Ausgestaltung ist zumindest die den Mitteln zum Aufbringen der Bremskraft zugewandte Reiblamelle als Krafteinleitungslamelle in Richtung der Bremskraft verschieblich und überträgt die Bremskraft auf die ihr zugewandten Wirkflächen der Planeteneinheit. Somit kann das zur freien Drehbarkeit der Planeteneinheit erforderliche Spiel von der Krafteinleitungslamelle überbrückt werden, bevor die Wirkflächen der Planeteneinheit an der Bremsvorrichtung anliegen und effektiv abgebremst werden.

Um das Ausgleichsgetriebe weiter konstruktiv zu vereinfachen, ist bevorzugt vorgesehen, dass die Mittel zum Aufbringen der Bremskraft nur einseitig der Planeteneinheit angeordnet sind und dass die auf der anderen Seite der Planeteneinheit angeordnete Reiblamelle als Abstützlamelle ausgebildet ist, die Bremskraft und Bremsmoment am feststehenden Getriebegehäuse abstützt. Eine Anordnung der Mittel zum Aufbringen der Bremskraft beidseitig der Planeteneinheit ist nicht zwingend notwendig. Bei einer Verzögerung der im Ganzen um die Abtriebswelle rotierenden Planeteneinheit wird diese durch das Einwirken der Bremskraft zunächst minimal um ihr seitliches Spiel axial verschoben bis sie mit der den Mitteln zum Aufbringen der Bremskraft gegenüberliegenden Seite an der angrenzenden Reiblamelle fest anliegt. Sodann können die Bremskräfte symmetrisch an der Planeteneinheit angreifen.

Das auf die Planeteneinheit übertragene Moment muss im feststehenden Getriebegehäuse abgestützt werden. Dies kann in vorteilhafter Weise dadurch erreicht werden, dass die Reiblamellen drehfest im dem feststehenden Getriebegehäuse angeordnet sind. Die Abstützung des Bremsmoments erfolgt dann über die Reiblamellen. Auf weitere Bauteile der Bremsvorrichtung wird kein Moment übertragen. Diese können dem entsprechend einfacher ausgelegt und konzipiert werden.

Da die Abstützlamelle im Gegensatz zur Krafteinleitungslamelle nicht in axialer Richtung verschieblich sein muss, sofern sie gleichzeitig am Getriebegehäuse anliegt, kann vorgesehen sein, dass die Abstützlamelle fest mit dem feststehenden Getriebegehäuse verbunden ist. Insbesondere kann die Abstützlamelle dadurch gebildet sein, dass der Reibbelag unmittelbar auf die Oberfläche des feststehenden Getriebegehäuses aufgebracht ist. Beispielweise kann er hiermit verschraubt oder verklebt sein. Hierdurch wird die Konstruktion weiter vereinfacht und es werden Bauteile und Kosten gespart.

Um die Einleitung des Bremsmoments in die Planeteneinheit weiter zu verbessern, kann vorgesehen sein, dass die Wirkflächen der Planeteneinheit einen Reibbelag nach Art des Reibbelags einer Reiblamelle aufweisen. So lässt sich eine sehr effiziente Reibflächenpaarung erzielen, die das Ansprechverhalten und die Regelbarkeit weiter verbessert.

Weiter kann vorgesehen sein, dass der Planetenradträger zumindest einseitig einen Trägerring aufweist, der nach Art einer Reiblamelle ausgebildet ist, wobei die Wirkfläche auf der den Planetenradpaaren abgewandten Seite des Trägerrings zum Zusammenwirken mit den Reiblamellen der Bremsvorrichtung mit einem Reibbelag ausgestattet ist. Ein solcher Trägerring bildet somit als Einheit sowohl ein zum Halten und zur Aufnahme der Planetenradpaare geeignetes tragendes Konstruktionselement als auch eine zur Einleitung des Bremsmomentes geeignete Wirkfläche.

Der Reibbelag kann mit dem Trägerring verklebt oder verschraubt sein. Vorteilhaft ist der Planetenträger weitgehend symmetrisch aufgebaut und weist den besagten Trägerring beidseitig auf. An dem Trägerring sind die Planetenradpaarwellen angeordnet, die fest mit dem Trägerring verbunden, insbesondere verschraubt, vernietet oder verschweißt sind.

Die Bremsvorrichtung kann vorteilhaft im feststehenden Getriebegehäuse angeordnet sein. Dieses ist im wesentlichen ortsfest zum Kraftfahrzeug angeordnet und die zur Betätigung der Bremsvorrichtung notwendigen Kraftübertragungsmittel, zum Beispiel Hydrauliköl, Druckluft oder elektrische Energie, können ohne Abdichtung relativ zueinander bewegter Bauteile bzw. ohne Schleifkontakte in das feststehende Getriebegehäuse eingeleitet werden.

Vorzugsweise umfassen die Mittel zum Aufbringen der das Bremsmoment hervorrufenden Bremskraft eine Hydraulikeinheit mit zumindest einem am oder im feststehenden Getriebegehäuse angeordneten Druckzylinder und auf eine Krafteinleitungslamelle wirkenden Druckstempel. Eine solche Anordnung überträgt die Bremskraft über die Druckstempel und die Krafteinleitungslamelle auf die Planeteneinheit, wobei das Bremsmoment von der Krafteinleitungslamelle aufgenommen und, sofern die Krafteinleitungslamelle drehfest an dem feststehenden Getriebegehäuse angeordnet ist, von dieser auch abgestützt wird. Die Druckstempel kommen so nicht direkt mit den Wirkflächen der Planeteneinheit in Kontakt und können konstruktiv einfacher ausgestaltet werden, da sie kein Moment aufnehmen müssen. Zur gleichmäßigen Einbringung der Bremskraft auf die Planeteneinheit sind bevorzugt mehrere Druckstempel über einen Umfang verteilt oder es ist ein ringförmiger Stempel vorgesehen, der sich bei Betätigung der Bremsvorrichtung gleichmäßig an die Krafteinleitungslamelle anzulegen vermag.

Besonders vorteilhaft ist eine Ausgestaltung, bei der die Druckstempel und die Krafteinleitungslamelle ein Bauteil bilden. Die Druckstempel können mit der Krafteinleitungslamelle über lösbare oder unlösbare Verbindungsmittel verbunden, insbesondere verschraubt, vernietet oder verschweißt sein. Es kann vorgesehen sein, dass die Krafteinleitungslamelle mit den Druckstempeln vom gleichen Bauteil gebildet wird wie ein Trägerring mit den daran angeordneten Planetenradpaarwellen, was zur weiteren Vereinfachung des Ausgleichsgetriebes beiträgt.

Für die Standardübersetzung des Zwischengetriebes wird vorzugsweise 0,85 < i₀ < 0,95 gewählt, weiter bevorzugt 0,89 < i₀ < 0,91. Die Standardübersetzung ist die Übersetzung, die sich beim Blockieren der Planeteneinheit ergibt. Sie beschreibt das Verhältnis der Antriebskorbdrehzahl zur Abtriebswellendrehzahl. Soll das Zwischengetriebe die diesem zugeordnete jeweilige Abtriebswelle nicht beschleunigen, sondern verzögern, kann eine der genannten Standardübersetzung entsprechende Standardübersetzung größer 1 gewählt werden, so dass dann über den Drehzahlausgleich im Planeten- oder Differentialgetriebe die jeweils andere Abtriebswelle beschleunigt wird.

Das Verhältnis Z des wirksamen Durchmessers des ersten Planetenrades zum wirksamen Durchmesser des zweiten Planetenrades sollte 0,90 bis 0.98, bevorzugt 0,93 bis 0,95, weiter bevorzugt 0,94 betragen. Das Verhältnis S des wirksamen Durchmessers des ersten Sonnenrads zum wirksamen Durchmesser des zweiten Sonnenrads sollte 1,01 bis 1,07, bevorzugt 1,03 bis 1,05, weiter bevorzugt 1,04 betragen. Das Verhältnis R₁ des wirksamen Durchmessers des ersten Sonnenrads zum wirksamen Durchmesser des ersten Planetenrads sollte 1,4 bis 1,6, bevorzugt 1,48 bis 1,52, weiter bevorzugt 1,50 betragen. Das Verhältnis R₂ des wirksamen Durchmessers des zweiten Planetenrads zum wirksamen Durchmesser des zweiten Sonnenrads sollte 0,68 bis 0,78, bevorzugt 0,72 bis 0,74, weiter bevorzugt 0,735 betragen. Diese Vorgaben ermöglichen die kompakte Bauform mit ausreichenden Wirkflächen zur Einleitung des Bremsmoments, die gewünschte Standardübersetzung sowie einen guten Wirkungsgrad.

Die Anwendung der Erfindung beschränkt sich selbstverständlich nicht auf die dargestellte Kegelraddifferentialanordnung. Andere Ausgleichsgetriebebauformen wie Stirnraddifferentiale, insbesondere in Planetenbauweise, oder Schneckenraddifferentiale werden ebenfalls als zur Erfindung gehörig angesehen. Ferner ist eine Anwendung in einem Verteilergetriebe ebenfalls denkbar, wenn zum gezielten Eingriff in die Fahrdynamik eines Fahrzeugs Vorder- und Hinterachse unterschiedlich beschleunigt oder verzögert werden sollen. Ein erfindungsgemäßes Ausgleichsgetriebe kann alternativ oder zusätzlich zu anderen Regelsystemen wie beispielsweise elektronischen Stabilitätsprogrammen eingesetzt werden.

Weitere Merkmale und Vorteile der Erfindung ergeben sich aus den Unteransprüchen und aus der nachfolgenden Beschreibung bevorzugter Ausführungsbeispiele anhand der Zeichnungen.

in den Zeichnungen zeigen
- Fig. 1: eine schematische Darstellung eines vorbekannten Ausgleichsgetriebes nach dem Stand der Technik,
- Fig. 2: eine mögliche Ausführungsform eines erfindungsgemäßen Ausgleichge- triebes,
- Fig. 3: eine Draufsicht auf eine Krafteinleitungslamelle bzw. einen Planetenradträ- ger,
- Fig. 4: eine Seitenansicht eines Planetenradträgers im Schnitt, und
- Fig. 5: eine Übersicht über eine mögliche Dimensionierung eines erfindungsge- mäßen Ausgleichgetriebes.

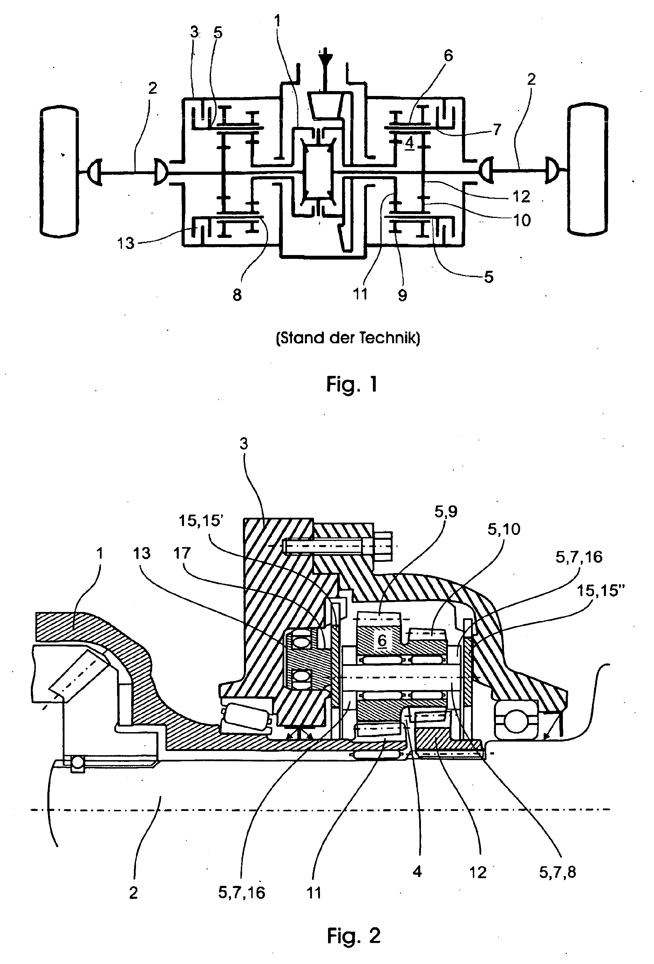

Fig. 1 zeigt eine schematische Darstellung eines vorbekannten Ausgleichsgetriebes, die zur Erläuterung der allgemeinen Funktionsweise herangezogen wird. Über eine Antriebswelle wird eine Antriebsleistung in den Antriebskorb 1 eingebracht und dort in der für Differentiale bekannten Weise auf zwei Abtriebswellen 2 verteilt. Der Aufbau des Ausgleichsgetriebes ist im wesentlichen symmetrisch zu beiden Abtriebsseiten. Die Abtriebswellen 2 sind zusätzlich über jeweils ein Zwischengetriebe 4 mit dem Antriebskorb 1 gekoppelt. Differential, Antriebskorb 1, Abtriebswellen 2 und Zwischengetriebe 4 sind zumindest zum Teil in einem feststehenden Getriebegehäuse 3 angeordnet und hierin gelagert.

Jedes Zwischengetriebe 4 weist eine Planeteneinheit 5 auf, die z.B. bei giermomentfreiem bei Geradeauslauf als Ganzes mit dem Antriebskorb 1 und Abtriebswelle 2 rotiert. Die Planeteneinheiten 5 umfassen mehrere Planetenradpaare 6, die zweckmäßig in regelmäßigen Abständen entlang des Umfangs angeordnet sind. In Fig. 1 sind je Zwischengetriebe 4 und Planeteneinheit 5 zwei Planetenradpaare 6 erkennbar. Diese sind jeweils auf eine Planetenradpaarwelle 8 angeordnet, die mit einem Planetenradträger 7 verbunden ist. Jedes Planetenradpaar 6 weist ein erstes Planetenrad 9 und eine zweites Planetenrad 10 auf. Das erste Planetenrad 9 kämmt mit einem mit dem Antriebskorb 1 drehfest verbundenen ersten Sonnenrad 11, das zweite Planetenrad 10 kämmt mit einem mit der jeweiligen Abtriebswelle 2 drehfest verbundenen zweiten Sonnenrad 12.

Fig. 1 zeigt weiter je Abtriebsseite eine Bremsvorrichtung 13, die eine Bremskraft auf die Planeteneinheit 5 übertragen kann. Die Bremsvorrichtung 13 wirkt zwischen dem feststehenden Getriebegehäuse 3 und der Planeteneinheit 5.

Wird nun auf einer Abtriebsseite die Planeteneinheit 5 abgebremst bzw. blockiert, kann die Planeteneinheit 5 nicht mehr frei umlaufen bzw. sie steht gegenüber dem feststehenden Getriebegehäuse 3. Das über den Antriebskorb 1 von der Antriebleistung unmittelbar angetriebene erste Sonnenrad 11 treibt über das erste Planetenrad 9 und über das damit drehfest verbundene zweite Planetenrad 10 die Abtriebswelle 2. Eine Kraftübertragung von dem Antriebskorb 1 auf die Abtriebswelle 2 über das Zwischengetriebe 4 ist gewährleistet. Die Differenzdrehzahl, die zwischen den beiden Abtriebswellen erzwungen wird, wird im Differential ausgeglichen. Mit Blockieren der Planeteneiriheit 5 ist das Verhältnis der Antriebskorbdrehzahl zu den Drehzahlen der Abtriebswellen 2 sowie das Verhältnis der Drehzahlen der Abtriebswellen 2 zueinander fix, unabhängig von Kurven- oder Geradeausfahrt. Ein gleichzeitiges Blockieren beider Zwischengetriebe 4 auf beiden Abtriebsseiten ist nicht möglich.

In Fig. 1 sind die Bremsvorrichtungen 13 erkennbar nur auf einer Seite der Planeteneinheit 5 und relativ weit von den Abtriebswellenachsen angeordnet, was zu den eingangs genannten Nachteilen führt.

In Fig. 2 ist ein Ausführungsbeispiel des erfindungsgemäßen Ausgleichsgetriebes gezeigt. Es ist nur eine Abtriebsseite des Ausgleichsgetriebes dargestellt. Die Antriebswelle (nicht gezeigt) treibt den Antriebskorb 1 über eine Kegelradverzahnung an. Der Antriebskorb 1 ist drehbar zum feststehenden Getriebegehäuse 3 gelagert. An dessen Ende ist das erste Sonnenrad 11 angeordnet, das mit dem ersten Planetenrad 9 in Eingriff steht. Das erste Planetenrad 9 ist drehfest mit dem zweiten Planetenrad 10 zum dem Planetenradpaar 6 verbunden und koaxial zu diesem angeordnet. Das zweite Sonnenrad 12 steht mit dem zweiten Planetenrad 10 in Eingriff, welches wiederum mit der Abtriebswelle 2 drehfest verbunden ist.

Das gezeigte Planetenradpaar 6 ist auf der Planetenradpaarwelle 8 drehbar gelagert und kann um diese rotieren. Die Planetenradpaarwelle 8 ist beidseitig mit jeweils einem Trägerring 16 verbunden. Den Planetenradträger 7 umfasst die Trägerringe 16 und Planetenradpaarwellen 8, die Planeteneinheit 5 umfasst darüber hinaus auch die Planetenradpaare 6.

Auf Seite des linken Trägerrings 16 ist eine Reiblamelle 15 angeordnet, die als Krafteinleitungslamelle 15' ausgebildet ist. Die Bremsvorrichtung 13, die in Fig. 2 beispielhaft als hydraulische Bremsvorrichtung gezeigt ist, bringt über einen Druckstempel 17 eine Bremskraft auf die Krafteinleitungslamelle 15' auf. Diese ist ringförmig ausgestaltet und über eine an deren äußeren Rand befindliche Verzahnung drehfest aber in Richtung der Drehachsen der Abriebswelle 2, des Antriebskorbs 1 und des Zwischengetriebes 4 verschieblich im feststehenden Getriebegehäuse 3 gelagert. Die Bremsvorrichtung 13 ist zweckmäßig so gestaltet, dass sie einen gleichmäßigen Druck auf die Krafteinleitungslammelle aufzubringen vermag.

Auf der Seite des rechten Trägerrings 16 ist ebenfalls eine Reiblamelle 15 vorgesehen, die als Abstützlamelle 15" ausgebildet ist. Auch die Abstützlamelle 15" ist drehfest und in gleiche Richtung wie die Krafteinleitungslamelle 15' verschieblich im feststehenden Getriebegehäuse 3 angeordnet. Die Verschieblichkeit der Abstützlamelle 15' ist jedoch für die Funktion des Ausgleichsgetriebes nicht erheblich. Die Abstützlamelle 15" kann auch unmittelbar am feststehenden Getriebegehäuse 3 anliegen bzw. an diesem befestigt werden, so dass auf eine Abstützlamelle 15" als getrenntes Bauteil verzichtet werden kann.

An den Trägerringen 16 sind Wirkflächen vorgesehen. Dies sind die Flächen, über die Bremskraft und Bremsmoment in die Planeteneinheit 5 eingebracht werden. Sie befinden sich bevorzugt beidseitig der Planetenradpaare 6 an den den Reiblamellen 15 zugewandten Seitenflächen der Trägerringe 16. Die Seitenflächen der Trägerringe 16 können dabei selbst in Gänze oder nur teilweise als Wirkfläche dienen. Als Wirkflächen werden bevorzugt Reibflächen, die ihrer Art nach den Reibflächen der Reiblamellen 15 entsprechen, auf die Seitenflächen der Trägerringe 16 aufgesetzt.

Mit der vorstehend beschriebenen Ausführungsform wird ein kompaktes, gut regelbares, leichtes und kostengünstiges Ausgleichsgetriebe geschaffen. Auch bedingt durch den einfachen Aufbau weist es eine hohe Lebensdauer auf und zeichnet sich durch einen geringen Bauraumbedarf und geringe konstruktive Komplexität aus.

Die beidseitig der Planeteneinheit 5 angeordneten Reiblamellen 15, die mit wenig Spiel zu den Seiten im feststehenden Getriebegehäuse 3 aufgenommen sind, gewährleisten durch Bildung eines Widerlagers eine stabile Lagerung der Planeteneinheit 5. Die im Zwischengetriebe 4 auftretenden Kräfte und Momente, die insbesondere bei Verzögerung oder Blockieren der Planeteneinheit, also bei Einsatz des Zwischengetriebes 4, durch die Bremseinrichtung 13 auftreten, werden durch die beidseitig der Planeteneinheit 5 angeordneten Bauteile effektiv aufgefangen und in das feststehenden Getriebegehäuse 3 eingeleitet. Die Planeteneinheit 5 kommt daher, wie in Fig. 2 dargestellt, ohne eine zusätzliche axiale Lagerung aus. Durch die kompakte Bauform und die hierdurch bedingten geringen Massen ergibt sich eine schnelle und effiziente Regelbarkeit eines Eingriffs durch die Bremsvorrichtung.

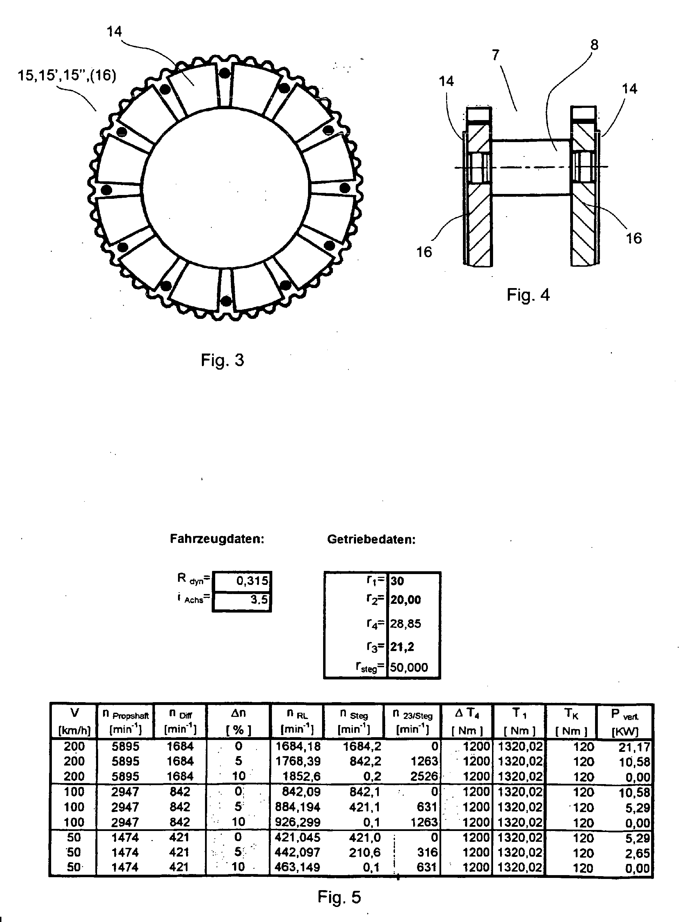

Fig. 3 zeigt eine Ausführungsform einer Reiblamelle 15 in einer Draufsicht. Vorderseitig sind regelmäßig über den Umfang verteilte Reibflächen erkennbar, die den Wirkflächen der Planeteneinheit zugewandt sind. Am äußeren Rand befindet sich eine Verzahnung, die die drehfeste und gleichzeitig axial verschiebliche Lagerung im feststehenden Getriebegehäuse 3 ermöglicht. Bei einer besonderen Ausgestaltung der Ausgleichgetriebes ist vorgesehen, dass die in Fig. 3 gezeigte Reiblamelle 15 bauteilgleich oder zumindest der Art nach auch als Trägerring 16 Verwendung findet. Es kann sich bei den Reiblamellen 15 um Trocken- oder Nasslamellen handeln. Bevorzugt kommen Nasslamellen nach Art einer Hydrokupplungslamellen zum Einsatz.

Fig. 4 zeigt eine mögliche Ausgestaltung eines Planetenradträgers 7 mit zwei Trägeringen 16, die im wesentlichen der Ausgestaltung der in Fig. 3 gezeigten Reiblamelle 15 entsprechen. Zwischen den Trägerringen 16 und fest mit diesen verbunden ist die Planetenradpaarwelle 8 gezeigt, auf der wie in Fig. 2 erkennbar, die Planetenradpaare 6 drehbar gelagert sind. Die Planetenradwellen 8 halten darüber hinaus die Trägerringe 16 bei Einwirken der Bremskraft auf Abstand, um die freie Drehbarkeit der Planetenradpaare zu gewährleisten. Um eine gleichmäßig Belastung der Trägerringe 16 zu gewährleisten, können weiter Stützelemente zwischen den Trägerringen vorgesehen werden, die eine Verformung und somit eine ungleichmäßige Belastung der Wirkflächen der Trägerringe 16 bei Einwirken der Bremskraft verhindern. Auf die Seitenflächen der Trägeringe 16 ist ähnlich einer Reiblamelle ein Reibbelag aufgebracht.

Fig. 5 zeigt eine Übersicht über eine beispielhafte geeignete Dimensionierung eines Ausgleichsgetriebes. Als Fahrzeugdaten sind willkürlich aber realistisch der dynamische Reifenradius R_{dyn} = 0,315 m und die Achsübersetzung i_{Achs} = 3,5 angegeben. Der Radius des ersten Sonnenrades beträgt r₁ = 30 mm, der des ersten Planetenrades r₂ = 20 mm, der des zweiten Planetenrades r₃ = 21,2 mm und schließlich der des zweiten Sonnenrades r₄ = 28,85 mm. Der Stegradius, also der Radius, auf dem die Planetenradpaare 6 um die Abtriebswellenachse rotieren bzw. der Radius, mit dem die Planetenradpaarwellen 8 von der Abtriebswellenachse beabstandet sind, beträgt r_{Steg} = 50 mm.

Hieraus ergibt sich ein Verhältnis Z des wirksamen Durchmessers des ersten Planetenrades zum wirksamen Durchmesser des zweiten Planetenrades von 0,94 und ein Verhältnis S des wirksamen Durchmessers des ersten Sonnenrads zum wirksamen Durchmesser des zweiten Sonnenrads von 1,04. Das Verhältnis R₁ des wirksamen Durchmessers des ersten Sonnenrads zum wirksamen Durchmesser des ersten Planetenrads beträgt 1,50, während das Verhältnis R₂ des wirksamen Durchmessers des zweiten Planetenrads zum wirksamen Durchmesser des zweiten Sonnenrads 0,735 beträgt. Die Standardübersetzung des Zwischengetriebes folgt aus diesen Angaben mit i₀ = 0,907.

Legt man diese Werte zugrunde, lassen sich für die betrachtete Abtriebsseite für jeweils angenommene Fahrzeuggeschwindigkeiten V untern anderem die folgenden aus der Tabelle in Fig. 5 entnehmbaren Größen berechnen:
- n_{Propshaft} (Antriebswellendrehzahl oder Motordrehzahl)
- n_{Diff} (Antriebskorbdrehzahl)
- Δn (relative Differenzdrehzahl zwischen Abtriebswelle und Antriebskorb)
- n_{RL} (Abtriebswellendrehzahl)
- n_{Steg} (Rotationsdrehzahl der Planeteneinheit)
- n_{23/Steg} (Drehzahl der Planetenradpaare um die Planetenradpaarwelle)

Neben den vorstehend genannten Daten enthält die Tabelle in Fig. 5 eine überschlägige Berechnung der durch das Ausgleichsgetriebe bzw. die Bremsvorrichtung für die jeweiligen Fahrzeuggeschwindigkeiten V verursachten Verlustleitung Pᵥₑᵣₗ. Der Berechnung liegt jeweils ein angenommenes Abtriebsmoment einer Abtriebswelle von ΔT₄ = 1200 Nm und ein daraus aufgrund der Standardübersetzung des Zwischengetriebes von i₀ = 0,907 folgendes Antriebsmoment des Antriebskorbes T₁ = 1320 Nm zugrunde. Das Kupplungsmoment T_{K}, also das auf die Planeteneinheit wirkende Bremsmoment, beträgt entsprechend der Standardübersetzung des Zwischengetriebes von i₀ = 0,907 etwa 10 % von ΔT₄ = 1200 Nm, also T_{K} = 120 Nm.

### Bezugszeichenliste

- 1: Antriebskorb
- 2: Abtriebswelle
- 3: feststehendes Getriebegehäuse
- 4: Zwischengetriebe
- 5: Planeteneinheit
- 6: Planetenradpaar
- 7: Planetenradträger
- 8: Planetenradpaarwelle
- 9: erstes Planetenrad
- 10: zweites Planetenrad
- 11: erstes Sonnenrad
- 12: zweites Sonnenrad
- 13: Bremsvorrichtung
- 14: Wirkflächen
- 15: Reiblamelle
- 15': Krafteinleitungslamelle
- 15": Abstützlamelle
- 16: Trägerring
- 17: Druckstempel

## Patentansprüche

1. Ausgleichsgetriebe für ein Kraftfahrzeug mit einem angetriebenen Antriebskorb (1), zwei über ein Planeten-oder Differentialgetriebe mit dem Antriebskorb (1) gekoppelten Abtriebswellen (2), sowie einem feststehenden Getriebegehäuse (3), wobei je Abtriebswelle (2) ein Zwischengetriebe (4) mit einer Planeteneinheit (5) vorgesehen ist, die Planeteneinheit (5) mehrere Planetenradpaare (6) und einen Planetenradträger (7) umfasst, die Planetenradpaare (6) auf mit dem Planetenradträger (7) verbundenen Plantetenradpaarwellen (8) angeordnet sind und jeweils ein erstes Planetenrad (9) und ein zweites Planetenrad (10) aufweisen, wobei das erste Planetenrad (9) und das zweite Planetenrad (10) koaxial zueinander angeordnet und drehfest miteinander verbunden sind, das erste Planetenrad (9) und das zweite Planetenrad (10) einen unterschiedlichen wirksamen Durchmesser aufweisen, das erste Planetenrad (9) mit einem ersten drehfest mit dem Antriebskorb (1) verbundenen ersten Sonnenrad (11) und das zweite Planetenrad (10) mit einem drehfest mit einer Abtriebswelle (2) verbundenen zweiten Sonnerad (12), das koaxial zum ersten Sonnenrad (11) angeordnet ist, in Eingriff stehen, wobei eine Bremsvorrichtung (13) vorgesehen ist, die Mittel zum Aufbringen einer ein Bremsmoment hervorrufenden Bremskraft aufweist, und das Bremsmoment die Planeteneinheit (5) relativ zum feststehenden Getriebegehäuse (3) abzubremsen vermag, und wobei die Planeteneinheit (5) Wirkflächen (14) aufweist, die zur Einleitung des Bremsmoments in die Planeteneinheit (5) vorgesehen sind, **dadurch gekennzeichnet, dass** die Wirkflächen (14) beidseitig der Planetenradpaare (6) vorgesehen und zumindest zum Teil seitlich neben den Planetenradpaaren (6) angeordnet sind.

2. Ausgleichsgetriebe nach Anspruch 1, **dadurch gekennzeichnet, dass** die Bremsvorrichtung (14) zur Einleitung des Bremsmoments in die Planeteneinheit (5) beidseitig der Planeteneinheit (5) Reiblammellen (15) aufweist.

3. Ausgleichsgetriebe nach Anspruch 2, **dadurch gekennzeichnet, dass** zumindest die den Mitteln zum Aufbringen der Bremskraft zugewandte Reiblamelle (15) als Krafteinleitungslamelle (15') in Richtung der Abtriebswellenachse verschieblich ist und die Bremskraft auf die ihr zugewandten Wirkflächen (14) der Planeteneinheit überträgt.

4. Ausgleichsgetriebe nach einem der beiden vorhergehenden Ansprüche, **dadurch gekennzeichnet, dass** das die Mittel zum Aufbringen der Bremskraft nur einseitig der Planeteneinheit (5) angeordnet sind, die auf der anderen Seite der Planeteneinheit (5) angeordnete Reiblamelle (15) als Abstützlamelle (15") ausgebildet ist, die Bremskraft und Bremsmoment am feststehenden Getriebegehäuse (3) abstützt.

5. Ausgleichsgetriebe nach einem der Ansprüche 2 bis 4, **dadurch gekennzeichnet, dass** die Reiblamellen (15) drehfest in dem feststehenden Getriebegehäuse (3) angeordnet sind.

6. Ausgleichsgetriebe nach einem der beiden vorhergehenden Ansprüche, **dadurch gekennzeichnet, dass** die Abstützlamelle (15") fest mit dem feststehenden Getriebegehäuse (3) verbunden ist.

7. Ausgleichsgetriebe nach einem der vorhergehenden Ansprüche, **dadurch gekennzeichnet, dass** die die Wirkflächen (14) der Planeteneinheit (5) einen Reibbelag nach Art des Reibbelags einer Reiblamelle (15) aufweisen.

8. Ausgleichsgetriebe nach einem der vorhergehenden Ansprüche, **dadurch gekennzeichnet, dass** der Planetenradträger (7) zumindest einseitig einen Trägerring (16) aufweist, der nach Art einer Reiblamelle ausgebildet ist, wobei die Wirkfläche (14) auf der den Planetenradpaaren abgewandten Seite des Trägerrings (16) zum Zusammenwirken der Bremsvorrichtung (13) mit einem Reibbelag ausgestattet ist.

9. Ausgleichsgetriebe nach einem der vorhergehenden Ansprüche, **dadurch gekennzeichnet, dass** die Bremsvorrichtung (13) im feststehenden Getriebegehäuse (3) angeordnet ist.

10. Ausgleichsgetriebe nach einem der Ansprüche 3 bis 9, **dadurch gekennzeichnet, dass** die Mittel zum Aufbringen der das Bremsmoment hervorrufenden Bremskraft eine Hydraulikeinheit mit zumindest einem am oder im feststehenden Getriebegehäuse (3) angeordneten Druckzylinder und auf eine Krafteinleitungslamelle (15') wirkenden Druckstempel (17) umfassen.

11. Ausgleichsgetriebe nach Anspruch 10, **dadurch gekennzeichnet, dass** die Druckstempel (17) und die Krafteinleitungslamelle ein Bauteil bilden.

12. Ausgleichsgetriebe nach einem der vorhergehenden Ansprüche, **dadurch gekennzeichnet, dass** für die Standardübersetzung des Zwischengetriebes (4) i0 < 1, bevorzugt 0,85 < i0 < 0,95, weiter bevorzugt 0,89 < i0 < 0,91 gilt.

13. Ausgleichsgetriebe nach einem der vorhergehenden Ansprüche, **dadurch gekennzeichnet, dass** das Verhältnis Z des wirksamen Durchmessers des ersten Planetenrades (9) zum wirksamen Durchmesser des zweiten Planetenrades (10) 0,90 bis 0.98, bevorzugt 0,93 bis 0,95, weiter bevorzugt 0,94 beträgt.

14. Ausgleichsgetriebe nach einem der vorhergehenden Ansprüche, **dadurch gekennzeichnet, dass** das Verhältnis S des wirksamen Durchmessers des ersten Sonnenrads (11) zum wirksamen Durchmesser des zweiten Sonnenrads (12) 1,01 bis 1,07, bevorzugt 1,03 bis 1,05, weiter bevorzugt 1,04 beträgt.

15. Ausgleichsgetriebe nach einem der vorhergehenden Ansprüche, **dadurch gekennzeichnet, dass** das Verhältnis R1 des wirksamen Durchmessers des ersten Sonnenrads (11) zum wirksamen Durchmesser des ersten Planetenrads (9) 1,4 bis 1,6, bevorzugt 1,48 bis 1,52, weiter bevorzugt 1,50 beträgt.

16. Ausgleichsgetriebe nach einem der vorhergehenden Ansprüche, **dadurch gekennzeichnet, dass** das Verhältnis R₂ des wirksamen Durchmessers des zweiten Planetenrads (10) zum wirksamen Durchmesser des zweiten Sonnenrads (12) 0,68 bis 0,78, bevorzugt 0,72 bis 0,74, weiter bevorzugt 0,735 beträgt.

## Claims

1. A differential gear for a motor vehicle with a driven drive cage (1), two output shafts (2) coupled with the drive cage (1) via a planetary or differential gear, as well as a fixed gear housing (3), wherein for each output shaft (2) an intermediate gear (4) with a planetary unit (5) is provided, the planetary unit (5) comprises a plurality of planetary gear pairs (6) and a planetary gear carrier (7), the planetary gear pairs (6) are arranged on planetary gear pair shafts (8) connected with the planetary gear carrier (7) and each comprises a first planetary gear (9) and a second planetary gear (10), wherein the first planetary gear (9) and the second planetary gear (10) are arranged coaxially relative to each other and are connected in a rotationally fixed manner with each other, the first planetary gear (9) and the second planetary gear (10) have a different effective diameter, the first planetary gear (9) is in mesh with a first sun gear (11) connected with the drive cage (1) in a rotationally fixed manner and the second planetary gear (10) is in mesh with a second sun gear (12) connected with an output shaft (2) in a rotationally fixed manner which sun gear is arranged coaxially to the first sun gear (11), wherein a braking device (13) is provided which comprises means for exerting a braking force that creates a braking moment and the braking moment is capable of braking the planetary unit (5) relative to the fixed gear housing (3) and wherein the planetary unit (5) comprises active faces (14) which are provided for introducing the braking moment into the planetary unit (5), **characterized in that** the active faces (14) are provided on both sides of the planetary gear pairs (6) and at least in part are arranged laterally next to the planetary gear pairs (6).

2. The differential gear according to Claim 1, **characterized in that** the braking device (14) for introducing the braking moment into the planetary unit (5) comprises friction discs (15) on both sides of the planetary unit (5).

3. The differential gear according to Claim 2, **characterized in that** at least the friction disc (15) facing the means for exerting the braking force as force-introducing disc (15') is displaceable in the direction of the output shaft axis and transmits the braking force on to the active faces (14) of the planetary unit facing it.

4. The differential gear according to any one of the two preceding claims, **characterized in that** the means for exerting the braking force are only arranged on one side of the planetary unit (5), the friction disc (15) arranged on the other side of the planetary unit (5) is embodied as support disc (15") which supports the braking force and braking moment on the fixed gear housing (3).

5. The differential gear according to any one of the Claims 2 to 4, **characterized in that** the friction discs (15) are arranged in the fixed gear housing (3) in a rotationally fixed manner.

6. The differential gear according to any one of the two preceding claims, **characterized in that** the support disc (15") is connected with the fixed gear housing (3) in a fixed manner.

7. The differential gear according to any one of the preceding claims, **characterized in that** the active faces (14) of the planetary unit (5) comprise a friction lining according to the type of the friction lining of a friction disc (15).

8. The differential gear according to any one of the preceding claims, **characterized in that** the planetary gear carrier (7) at least on one side comprises a carrier ring (16) which is embodied according to the type of a friction disc, wherein the active face (14) on the side of the carrier ring (16) facing away from the planetary gear pairs for the interaction of the braking device (13) is equipped with a friction lining.

9. The differential gear according to any one of the preceding claims, **characterized in that** the braking device (13) is arranged in the fixed gear housing (3).

10. The differential gear according to any one of the Claims 3 to 9, **characterized in that** the means for exerting the braking force causing the braking moment comprise an hydraulic unit with at least one pressure cylinder arranged on the or in the fixed gear housing (3) and a pressure ram (17) acting on a force-introducing disc (15').

11. The differential gear according to Claim 10, **characterized in that** the pressure ram (17) and the force-introducing disc form a component.

12. The differential gear according to any one of the preceding claims, **characterized in that** i0 < 1, preferably 0.85 < i0 < 0.95 further preferably 089 < i0 < 091 applies to the standard transmission ratio of the intermediate gear (4).

13. The differential gear according to any one of the preceding claims, **characterized in that** the ratio Z of the effective diameter of the first planetary gear (9) to the effective diameter of the second planetary gear (10) amounts to 0,90 to 0.98, preferably 0.93 to 0.95, further preferably 0.94.

14. The differential gear according to any one of the preceding claims, **characterized in that** the ratio S of the effective diameter of the first sun gear (11) to the effective diameter of the second sun gear (12) amounts to 1.01 to 1.07, preferably 1.03 to 1.05, further preferably 1.04.

15. The differential gear according to any one of the preceding claims, **characterized in that** the ratio R1 of the effective diameter of the first sun gear (11) to the effective diameter of the first planetary gear (9) amounts to 1.4 to 1.6, preferably 1.48 to 1.52 further preferably 1.50.

16. The differential gear according to any one of the preceding claims, **characterized in that** the ratio R₂ of the effective diameter of the second planetary gear (10) to the effective diameter of the second sun gear (12) amounts to 0.68 to 0.78, preferably 0.72 to 0.74, further preferably 0.735.

## Revendications

1. Différentiel pour véhicule automobile comportant une cage d'entraînement (1) entraînée, deux arbres de sortie (2) couplés à la cage d'entraînement (1) par l'intermédiaire d'engrenages planétaires ou différentiels ainsi qu'un logement d'engrenage fixe (3), dans lequel chaque arbre de sortie (2) est pourvu d'un engrenage intermédiaire (4) comportant une unité planétaire (5), l'unité planétaire (5) comprend plusieurs paires de roues planétaires (6) et un support de roues planétaires (7), les paires de roues planétaires (6) sont disposées sur des arbres de paires de roues planétaires (8) reliés au support de roues planétaires (7) et présentent respectivement une première roue planétaire (9) et une deuxième roue planétaire (10), moyennant quoi la première roue planétaire (9) et la deuxième roue planétaire (10) sont disposées coaxialement l'une à l'autre et reliées de manière solidaire en rotation l'une à l'autre, la première roue planétaire (9) et la deuxième roue planétaire (10) présentent un diamètre opérationnel différent, la première roue planétaire (9) vient en prise avec une première roue solaire (11) reliée de manière solidaire en rotation à la cage d'entraînement (1) et la deuxième roue planétaire (10) vient en prise avec une deuxième roue solaire (12) reliée de manière solidaire en rotation avec un arbre de sortie (2), laquelle est disposée coaxialement à la première roue solaire (11), dans lequel un dispositif de freinage (13) est prévu, lequel présente des moyens pour appliquer une force de freinage provoquant un couple de freinage et le couple de freinage autorise l'unité planétaire (5) à freiner par rapport au logement d'engrenage fixe (3), et dans lequel l'unité planétaire (5) présente des surfaces opérationnelles (14), qui sont prévues afin d'induire le couple de freinage dans l'unité planétaire (5), **caractérisé en ce que** les surfaces opérationnelles (14) sont prévues des deux côtés des paires de roues planétaires (6) et au moins partiellement latéralement à côté des paires de roues planétaires (6).

2. Différentiel selon la revendication 1, **caractérisé en ce que** le dispositif de freinage (14) présente des lamelles de friction (15) des deux côtés de l'unité planétaire (5) afin d'induire le couple de freinage dans l'unité planétaire (5).

3. Différentiel selon la revendication 2, **caractérisé en ce que** au moins la lamelle de friction (15) tournée vers les moyens d'application de la force de freinage est déplaçable en tant que lamelle d'induction de force (15') dans la direction de l'axe d'arbre de sortie et transmet la force de freinage aux surfaces opérationnelles (14) de l'unité planétaire tournées vers elle.

4. Différentiel selon une des deux revendications précédentes, **caractérisé en ce que** les moyens d'application de la force de freinage sont disposés seulement d'un côté de l'unité planétaire (5), la lamelle de friction (15) disposée de l'autre côté de l'unité planétaire (5) est réalisée comme une lamelle d'appui (15"), qui soutient la force de freinage et le couple de freinage sur le logement d'engrenage fixe (3).

5. Différentiel selon une des revendications 2 à 4, **caractérisé en ce que** les lamelles de friction (15) sont disposées de manière solidaire en rotation dans le logement d'engrenage fixe (3).

6. Différentiel selon une des deux revendications précédentes, **caractérisé en ce que** la lamelle d'appui (15") est reliée solidement au logement d'engrenage fixe (3).

7. Différentiel selon une des revendications précédentes, **caractérisé en ce que** les surfaces opérationnelles (14) de l'unité planétaire (5) présentent un revêtement de friction à la manière du revêtement de friction d'une lamelle de friction (15).

8. Différentiel selon une des revendications précédentes, **caractérisé en ce que** le support de roues planétaires (7) présente au moins d'un côté une bague de support (16), qui est configurée à la manière d'une lamelle de friction, dans lequel la surface opérationnelle (14) est équipée d'un revêtement de friction sur le côté de la bague de support (16) qui se détourne des paires de roues planétaires afin de coopérer avec le dispositif de freinage (13).

9. Différentiel selon une des revendications précédentes, **caractérisé en ce que** le dispositif de freinage (13) est disposé dans le logement d'engrenage fixe (3).

10. Différentiel selon une des revendications 3 à 9, **caractérisé en ce que** les moyens d'application de la force de freinage provoquant le couple de freinage comprennent une unité hydraulique avec au moins un cylindre de pression disposé sur ou dans le logement d'engrenage (3) et un vérin presseur (17) agissant sur une lamelle d'induction de force (15').

11. Différentiel selon la revendication 10, **caractérisé en ce que** le vérin presseur (17) et la lamelle d'induction de force forment un composant.

12. Différentiel selon une des revendications précédentes, **caractérisé en ce que** pour la translation standard de l'engrenage différentiel (4), une valeur i0 < 1 vaut, de préférence 0,85 < i0 < 0,95, de manière encore préférable 0,89 < i0 < 0,91.

13. Différentiel selon une des revendications précédentes, **caractérisé en ce que** le rapport Z du diamètre opérationnel de la première roue planétaire (9) par rapport au diamètre opérationnel de la deuxième roue planétaire (10) est compris entre 0,90 et 0,98, de préférence 0,93 et 0,95, de manière encore préférable s'élève à 0,94.

14. Différentiel selon une des revendications précédentes, **caractérisé en ce que** le rapport S du diamètre opérationnel de la première roue solaire (11) par rapport au diamètre opérationnel de la deuxième roue solaire (12) est compris entre 1,01 et 1,07, de préférence entre 1,03 et 1,05, de manière encore préférable s'élève à 1,04.

15. Différentiel selon une des revendications précédents, **caractérisé en ce que** le rapport R1 du diamètre opérationnel de la première roue solaire (11) par rapport au diamètre opérationnel de la première roue planétaire (9) est compris entre 1,4 et 1,6, de préférence 1,48 et 1,52, de manière encore préférable s'élève à 1,50.

16. Différentiel selon une des revendications précédentes, **caractérisé en ce que** le rapport R₂ du diamètre opérationnel de la deuxième roue planétaire (10) par rapport au diamètre opérationnel de la deuxième roue solaire (12) est compris entre 0,68 et 0,78, de préférence entre 0,72 et 0,74, de manière encore préférable s'élève à 0,735.
